# EUROPEAN PATENT SPECIFICATION

(11) **EP 1 767 336 B1**
(45) Date of publication and mention of the grant of the patent: **28.12.2011**
(21) Application number: 06019553.4
(22) Date of filing: 19.09.2006
(51) Int. Cl.: B29D 30/06, B05B 13/02, B05D 1/02

(54) **Method of forming an identification mark on a tyre tread by spraying a paint and apparatus therefor.**
Verfahren zum Formen von Identifizierungsmarken auf der Laufläche eines Luftreifens durch Farbspritzen und Vorrichtung hierzu.
Procédé pour former une marque d'identification sur la bande de roulement d'un pneumatique par pulvérisation de peinture et dispositif de pulvérisation associé.

(30) Priority: 21.09.2005 JP 2005274318
(43) Date of publication of application: 28.03.2007
(73) Proprietor: Sumitomo Rubber Industries, Ltd., Kobe-shi, Hyogo-ken (JP)
(72) Inventor: Yarimizu, Kazuaki c/o Sumitomo Rubber Ind.,Ltd., Chuo-ku Kobe-shi Hyogo-ken (JP); Onimatsu, Hiroyuki c/o Sumitomo Rubber Ind.,Ltd., Chuo-ku Kobe-shi Hyogo-ken (JP); Miki, Youjirou c/o Sumitomo Rubber Ind.,Ltd., Chuo-ku Kobe-shi Hyogo-ken (JP)
(74) Representative: Manitz, Finsterwald & Partner GbR

(56) References cited:
- EP-A- 1 250 998
- CN-A- 1 476 970
- GB-A- 2 370 546
- KR-A- 20020 039 872
- US-A- 5 573 625
- US-A1- 2004 013 754
- US-A1- 2004 050 471
- US-A1- 2006 164 727

## Description

### Background of the invention

The present invention relates to a method of manufacturing a pneumatic tire, more particularly to a method and an apparatus for painting a mark on the tread face of a pneumatic tire.

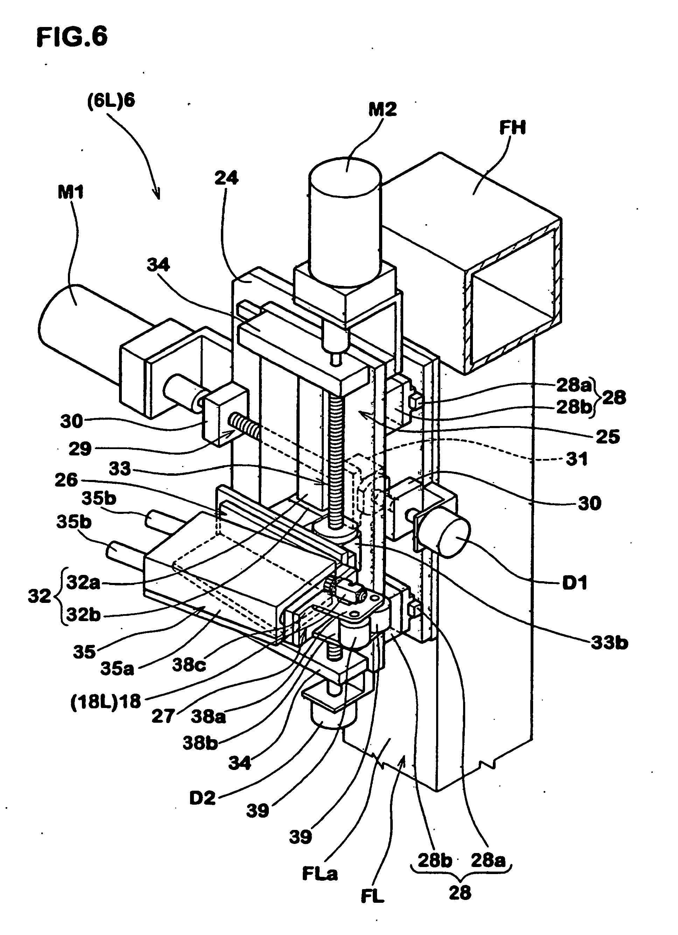

Conventionally, a raw tread rubber or an extruded strip of a tread rubber compound is provided on the surface thereof with characters and/or lines for the purpose of identifying the compound, cross sectional shape, size and the like as disclosed in the Japanese patent application publication JP-p2002-36692A, This publication discloses that such a line has hitherto been painted by spraying an ink as illustrated in the figure 6 of the publication.

In general, a pneumatic tire is provided on the sidewalls with various information by means of molding. But, if the tires are stacked or closely placed side by side, it is difficult to read the information. Therefore, it is very useful for tire dealers, auto manufacturers, especially for the tire manufacturer, to provide a tire identification mark on the tread faces.

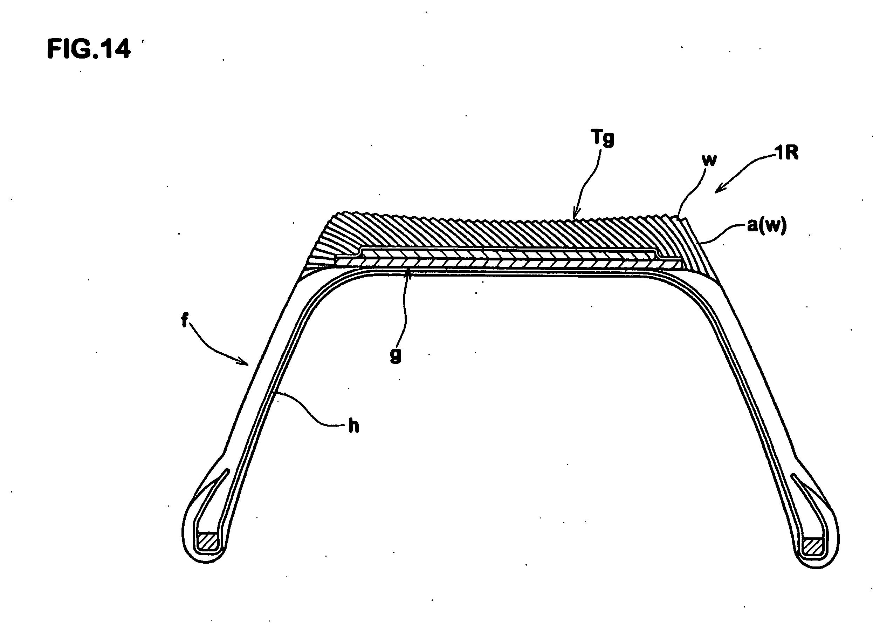

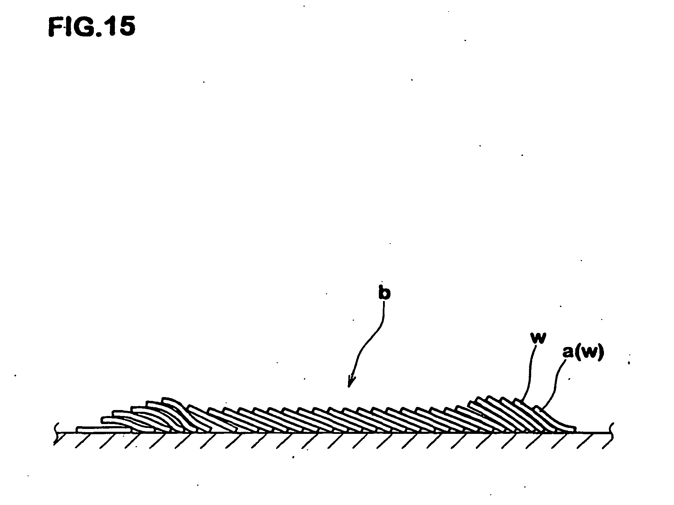

In recent years, on the other hand, to avoid the use of the conventional extruded strip of a tread rubber compound which requires a large-sized rubber extruding machine, as shown in Figs.14 and 15, so called tape-winding method is used to make a tread rubber. In this method, a tape of a rubber compound, which is significantly narrower and thinner than the conventional tread rubber strip, is overlap winded into a target cross-sectional shape close to that of the tread rubber.

In the case of the tape-winding method, the windings of the raw rubber tape are largely moved relatively and absolutely during tire vulcanization. Accordingly, if a mark is painted on the tread rubber in the raw state, the mark on the vulcanized tire is greatly deformed or broken. Therefore, the look of the tire is not good. Further, there is a possibility that the paint penetrates between the windings and hinders the adhesion between the windings. Further, the paint between the windings appears on the tread face as parallel thin lines and even if the surface of the tread rubber wears in use, the parallel thin lines do not disappear. This also makes the look of the tire not good.

A method of coating a tire with a colored composition based on polyurethane is known from US 2004/0013754-A. Further relevant prior art is disclosed by US 2004/0050471-A, GB 2 370 546-A, US 2006/0164727-A, CN 1476970-A, US 5 573 625-A, EP 1 250 908-A, KR 20020039872-A and US 5904792 A.

### Summary of the Invention

An object of the present invention is to provide a method of manufacturing a pneumatic tire in which an identification mark is painted on the surface of the tread portion without the paint penetrating into the tread rubber.

Still another object of the present invention is to provide an apparatus for spray-painting an identification mark on the tread face of a pneumatic tire.

According to one aspect of the present invention, a method of manufacturing a pneumatic tire comprises the features of claim 1.

According to another aspect of the preset invention, an apparatus for spray-painting a mark on the tread face of a pneumatic tire (hereinafter "spray-painting machine") comprises the features of claim 6.

Particular embodiments of the invention are defined in the dependent claims.

### Brief Description of the Drawings

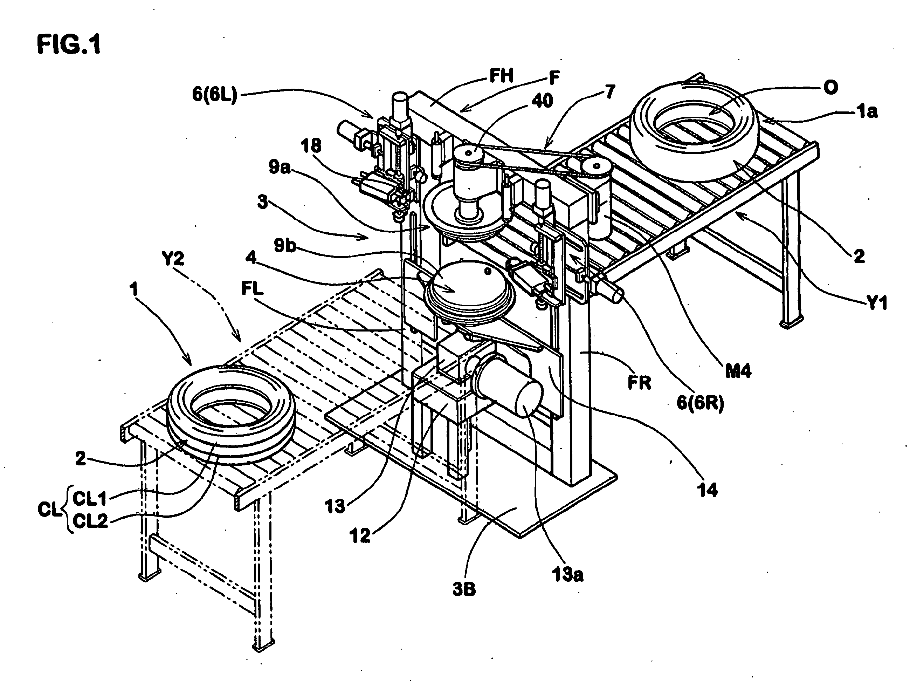

Fig.1 is a perspective view showing a spray-painting machine according to the present invention together with conveyers.
Fig.2 is an enlarged perspective view of the spray-painting machine.
Fig.3 is a front elevational view of the spray-painting machine.
Fig.4 is a schematic plan view thereof.
Fig.5 shows a block diagram of a paint spray system together with the longitudinal cross section of the spray gun.
Fig.6 is a perspective view of the spray gun shifter.
Fig.7 is a block diagram of the spray-painting machine.
Figs.8 to 13 are diagrams for explaining the operations of the painting machine.
Fig.14 is a cross sectional view of a raw tire formed according to the present invention.
Fig.15 is a schematic cross sectional view of the raw tread rubber formed according to the present invention.

### Description of the Preferred Embodiments

Embodiments of the present invention will now be described in detail in conjunction with the accompanying drawings.

According to the present invention, in order to manufacture a pneumatic tire, a raw tire 1R is vulcanized in a vulcanization mold, and then, the vulcanized tire 1a is provided on the tread face 2 with an identification mark CL by the use of spray means.

The identification mark can be a large number of dots which express at least one character, dashes or broken line, at least one continuous line and the like, arranged alone or in combination. In this embodiment, the identification mark is two continuous colored lines CL, wherein combinations of the two colors indicate tread rubber compounds.

An example of the raw tire 1R is shown in Fig.14. As to the method of manufacturing the raw tire 1R, various methods can be used, but in this embodiment, the so called tape winding method is incorporated in order to make a rubber component of the tire which is, in this example, a tread rubber defining the tread face of the tire.

Here, the tape winding method is such that a tire component, e.g. tread rubber Tg is formed by winding a rubber tape (a) a large number of times around the tire rotational axis into a target shape of the tire component.

In the case of the tread rubber Tg, a rubber tape (a) may be wound directly on a raw tire main body (f) which is shaped in a toroidal shape and includes a carcass (h). In this example, however, a tread reinforcing belt (g) is first wound around a profiled tread building drum, and then, by winding a rubber tape (a) therearound, the tread rubber Tg is formed thereon. Then, the assembly of the tread rubber Tg and belt (g) is combined with the raw tire main body (f).

The painting of the mark CL is carried out by the use of a spray-painting machine 3.

The spray-painting machine 3 comprises a gate-shaped main frame F. The main frame F is composed of: substantially vertical right and left frames FL and FR; and a substantially horizontal frame FH extending between the upper ends of the vertical frames FL and FR.

On one side, the upstream side of the spray-painting machine 3, an upstream conveyer Y1 is disposed to convey the vulcanized tire 1a towards the main frame F in a state that the tire lies sideways, namely, the tire rotational axis is substantially vertical. On the other side, the downstream side of the spray-painting machine 3, a downstream conveyer Y2 is disposed in order to carry out the tire 1 provided with the mark CL. The conveyers Y1 and Y2 have widths more than the outer diameter of the largest tire 1a to be conveyed. Also, between the vertical frames FL and FR, there is a space wide enough to pass such tire 1a in the lying-sideways state through therebetween.

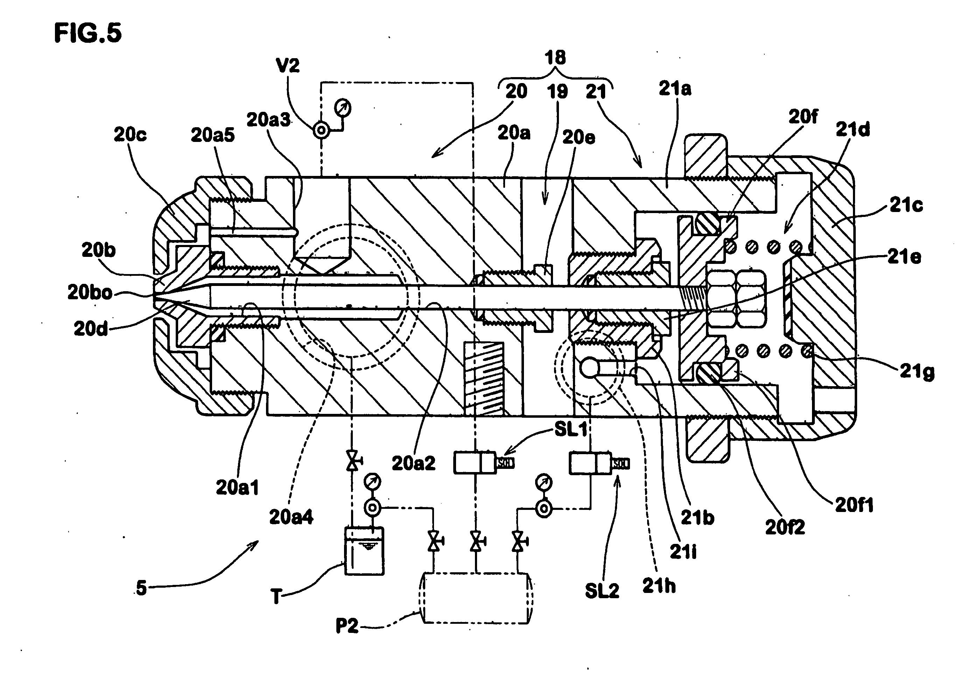

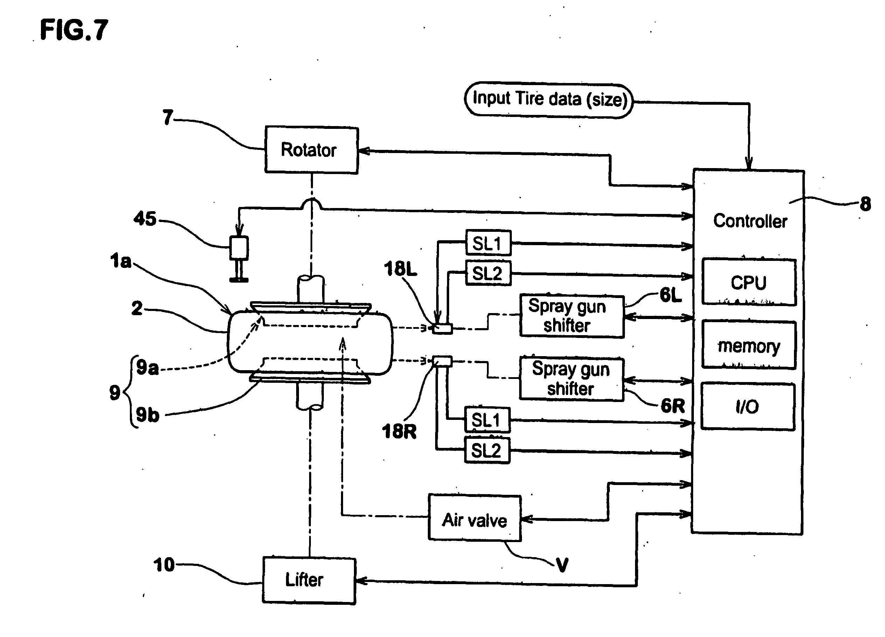

The spray-painting machine 3 further comprises: a tire holding device 4; a rotator 7 for the tire held by the tire holding device 4; a paint spray system 5 including a spray gun 18 (shown in Fig.5); a spray gun shifter 6 to move the spray gun to a specific spray position; and a controller 8 (shown in Fig.7).

The tire holding device 4 comprises: a tire holder 9 comprising a pair of bead support disks 9a and 9b arranged one above the other to function like a sprit wheel rim; and a lifter 10 to move the lower disk 9b up and down.
Each of the bead support disks 9a and 9b is provided around its plate-shaped central portion 9A with an annular bead seat portion 9B to fit to the bead portion of the tire. The bead support disks 9a and 9b are disposed oppositely, and by reducing the distance therebetween, the bead seats S fit to the beads of the tire. In this example, the bead seat portion 9B is provided with a plurality of bead seats SS, SM and SL having different outer diameters. The bead seats SS, SM and SL are arranged like a step to increase the outer diameter from the axially inside to the axially outside. Therefore, the bead seat portion 9B can fit to the bead portions of plural kinds of tires having different inside diameters.

Each of the bead support disks 9a and 9b is attached to an end of a shaft 11. The shaft 11 of the upper bead support disk 9a extends upwards. The shaft 11 of the lower bead support disk 9b extends downwards. Between the central portions 9A and 9A of the upper and lower disks 9a and 9b, a space wide enough for the tire 1a to pass through is formed.

The above-mentioned lifter 10 in this embodiment comprises: a fixed table 12; a movable frame 14; and an actuator 13 placed on the fixed table 12 to move the movable frame 14 up and down. The fixed table 12 is fixed to a base 3B of the spray-painting machine 3 for example. The actuator 13 includes: an electric motor 13a; a gear box 13b to convert rotary motions of the electric motor 13a to linear motions; and an up-and-down rod 13c protruding from the gear box 13b.

The movable frame 14 comprises: a cross member 14a extending horizontally between the above-mentioned vertical frames FL and FR; and a table 14b protruding horizontally from the upper end of the cross member 14a.
Both ends of the cross member 14a are supported by linear guides R of which track assemblies are fixed to the vertical frames FL and FR respectively so that the tracks extend vertically, and carriages are fixed to the cross member 14a. Thus, the cross member 14a is movable along the vertical direction. By rising the up-and-down rod 13c of the actuator 13, the upper end of the up-and-down rod 13c comes into contact with the underside of the table 14b.

Therefore, by rotating the shaft of the electric motor 13a in a certain direction, the up-and-down rod 13c rises upwards protruding from the gear box 13b, and pushes up the table 14b and the movable frame 14 together with the lower bead support disk 9b. By rotating the shaft of the electric motor 13a in the reverse direction, the up-and-down rod 13c moves downward and the movable frame 14 also moves downward together with the lower bead support disk 9b owing to the weight thereof.

The shaft 11 of the upper bead support disk 9a is rotatably supported by a bearing 17u fixed to the side face of the horizontal frame FH. The shaft 11 of the lower disk 9b is supported by a bearing 17d fixed to the table 14b coaxially with the shaft 11 of the upper disk 9a.
When the upper and lower bead support disks 9a and 9b are fitted to the center holes O of the tire, the tire hollow and the gap between the disks 9a and 9b form a closed airtight space.

During spraying the paint to the tread face 2, it is preferable that the tire 1a (the above-mentioned space) is filled with air having a pressure higher than the atmosphere pressure, preferably 0.1 to 0.3 MPa. Therefore, in this embodiment, an air inlet 9in is provided in the central portion 9A of the lower bead support disk 9b, and a high-pressure air source P1 is connected to the air inlet 9in through the air valve v.

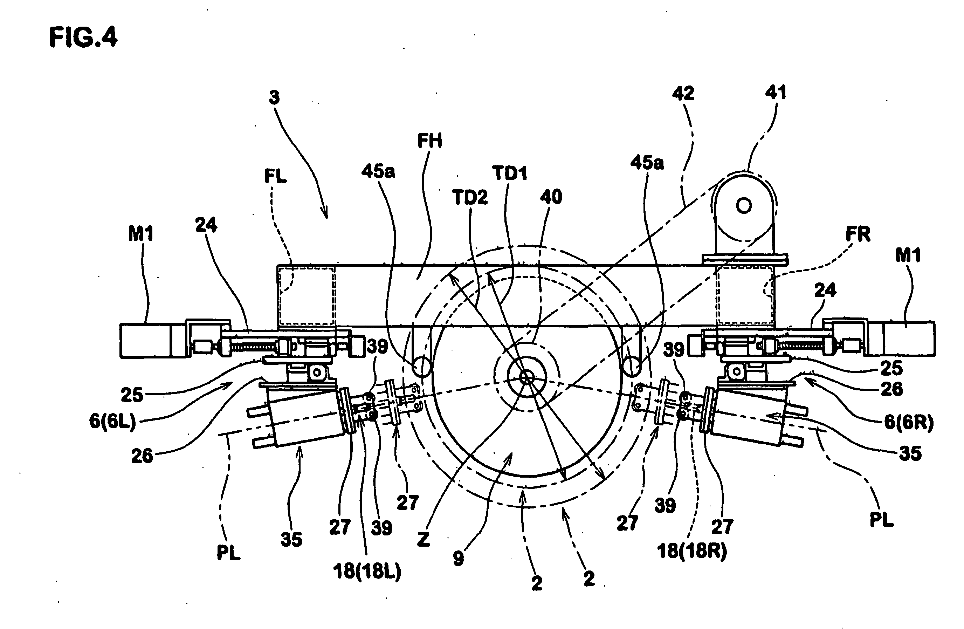

As shown in Fig.5, the paint spray system 5 comprises: at least one spray gun 18; a paint tank T; and a high pressure air source P2. In this embodiment, two spray gun 18, a first spray gun 18L and a second spray gun 18R are provided. As shown in Fig.4, the first and second spray guns 18L and 18R are disposed at different positions with respect to the circumferential direction of the tire held between the upper and lower bead support disks 9a and 9b, namely, opposite positions around the rotational axis of the support disks 9a and 9b, one of which is differed almost 180 degrees from the other. The on/off of the spraying of the spray gun 18 is controlled by the controller 8.

Each spray gun 18 is integrally provided with a main portion 20 formed on the front side of a cutout 19, and a switching portion 21 formed on the back side of the cutout 19 as shown in Fig.5.

The main portion 20 comprises: a rectangular tubular body 20a; a head 20b having a nozzle 20bo and screwed in the front end of the tubular body 20a; and an air cap 20c screwed to the outside of the front end portion of the tubular body 20a to cover the head 20b.

The tubular body 20a is provided along its central axis with a paint passage 20al extending to the nozzle 20bo, and also with a guide hole 20a2 which extends backward from the rear end of the paint passage 20a1 and has an inside diameter smaller than that of the paint passage 20a1.

In this embodiment, in order to push out the paint in the paint tank T, high-pressure air is charged in the paint tank T from the high pressure air source p2 through a regulator. The paint pushed out from the paint tank T is supplied into the above-mentioned paint passage 20al using a paint supply port 20a4. The pressure of the paint tank T which pushes out the paint is preferably set at a relatively low pressure of from 0.01 to 0.1 MPa not to spray the paint in a wide area because the width of the colored line to be painted is about 1 mm to about 10 mm.

At the rear end of the guide hole 20a2, a sleeve 20e is fixed to the tubular body 20a together with a seal ring. Into the guide hole 20a2 and sleeve 20e, a needle valve 20d is slidably inserted. The needle valve 20d extends to the head 20b, passing through the paint passage 20a1. when the needle valve 20d is moved forward, the nozzle 20bo is closed. When moved backward, the nozzle 20bo is opened.

In order to move the needle valve 20d, a piston 20f is provided at the rear end of the part protruding from the sleeve 20e. The sleeve 20e has an 0-ring therein to prevent leakage of the paint.

The tubular body 20a is provided with an air supply port 20a3 to which high-pressure air is supplied from the high pressure air source P2 through a regulator v2. An air flow path 20a5 is formed in the tubular body 20a, and one end thereof is connected to the air supply port 20a3. The other end is connected to a gap formed between the head 20b and air cap 20c. Accordingly, the air from the high pressure air source p2 jets out from the center hole of the air cap 20c to the atmosphere, and the blowing air atomizes the paint discharged from the nozzle 20bo. The blowing air pressure is adjusted by the regulator v2 to a value which is preferably in a range of 0.05 to 0.3 MPa.

For example, the on/off of the blowing air is controlled by switching an electromagnetic valve SL2 disposed between the high pressure air source p2 and the air supply port 20a3.

The switching portion 21 comprises: a rectangular rear tubular body 21a; a sleeve 21b screwed in the front of the rear tubular body 21a; and an end cap 21c screwed at the rear of the rear tubular body 21a. Between the sleeve 21b and end cap 21c, a piston chamber 21d is formed.

In the piston chamber 21d, the above-mentioned piston 20f is disposed slidably in the back and forth direction. The piston 20f comprises: a plate-shaped main body 20f1 fixed by locking nuts 21e; and an O-ring 20f2 fitted in an annular groove formed in the rim of the main body 20f1 to provide air-tightness for the piston chamber 21d.
Between the main body 20f1 and the end cap 21c, a compressed coil spring 21g is disposed to always force forwards the piston 20f and also the needle valve 21d.

To the space between the piston 20f and sleeve 21b formed within the piston chamber 21d, high-pressure air is supplied from the high pressure air source p2, using an air supply port 21h and air flow path 21i. Thus, the piston 20f is moved backwards, together with the needle valve 20d, while compressing the coil spring 21g, accordingly the nozzle 20bo is opened. When the supply of high-pressure air is stopped, owing to the resilience of the coil spring 21g, the piston 20f is forced forwards together with the needle valve 20d, accordingly the nozzle 20bo is closed.

The on/off of the supply of the high-pressure air to the air supply port 21h is controlled by the controller 8 which switches an electromagnetic valve SL1 disposed between the air supply port 21h and high pressure air source p2 according to a program stored therein. The controller 8 also controls the electromagnetic valve SL2 in conjunction with the electromagnetic valve SL1.

As to the paint, quick-drying paints which become dry to the touch within 10 minutes at ambient temperatures (25+/-3 deg.C) are preferably used. In order that the paint does not deteriorate the rubber, preferably used is, for example, a plastic paint containing fluorocarbon resin, acrylate resin, alkyd resin, and the like, alone or in combination and pigment. The recipe for the paint used in this embodiment is as follows:

| Ingredient | Content(%) |
|---|---|
| acrylate resin | 8.5 |
| alkyd resin | 8.4 |
| fluorocarbon resin | 1.3 |
| pigment | 11.5 |
| toluene | 63.8 |
| aromatic solvent | 6.5 |

The above-mentioned spray gun shifter 6 can move the spray gun 18 near to the tread face 2 of the tire 1a held by the tire holder 9.

In this embodiment, the spray gun shifter 6 includes tow shifters 6R and 6L. The first spray gun shifter 6L is disposed on the vertical frames FL to shift the first spray gun 18L. The second spray gun shifter 6R is provided on the vertical frames FR to shift the second spray gun 18.

Fig.6 shows one of the spray gun shifters 6 (6L). This example can move the spray gun 18 in the tire axial direction and in the tire radial direction, independently.

The spray gun shifter 6 comprises: a base 24 which is a wide flat plate fixed to the vertical frames FL; a horizontal mover 25 which is horizontally moveably attached to the base 24 with a linear guide 28; a vertical mover 26 which is vertically moveably attached to the horizontal mover 25 with a linear guide 32; and a radial mover 27 which is attached to the vertical mover 26 with an actuator 35 so as to be moveable in the radial direction of the tire 1a held by the tire holder 9. And to the radial mover 27, the spray gun 18 (in Fig.6, the first spray gun 18L) is fixed.

The linear guide 28 comprises a rail assembly 28a extending horizontally and fixed to the base 24, and a slide bearing 28b being movable along the rail assembly 28a and fixed to the horizontal mover 25. The base 24 is provided with a horizontally extending ball screw shaft 29 supported by bearings 30 and 30 fixed to the base 24. The ball screw nut 31 is fixed to the horizontal mover 25. A geared electric motor M1 is coupled with an end of the ball screw shaft 29.
Accordingly, by rotating the geared electric motor M1, the ball screw shaft 29 is rotated and the horizontal mover 25 moves from side to side along the ball screw shaft 29.
The moving distance, which is digitized for example using a sensor D1 such as a pulse encoder detecting the rotation of the ball screw shaft 29, is input to the controller 8.

Similarly, the linear guide 32 comprises a rail assembly 32a extending vertically and fixed to the horizontal mover 25, and a slide bearing 32b being moveable along the rail assembly 32a and fixed to the vertical mover 26.

The horizontal mover 25 is provided with a vertically extending ball screw shaft 33 supported by bearings 34 fixed to the horizontal mover 25. The ball screw nut 33b is fixed to the vertical mover 26. A geared electric motor M2 is coupled with an end of the ball screw shaft 33.
Accordingly, by rotating the geared electric motor M2, the ball screw shaft 33 is rotated, and the vertical mover 26 moves up and down along the ball screw shaft 33.
The moving distance which is digitized for example using a sensor D2 such as pulse encoder detecting the rotation of the ball screw shaft 33, is input to the controller 8.

The vertical mover 26 in this embodiment is made up of a vertical part and a horizontal part to have a L-shape. And the actuator 35 is fixed to the horizontal part.

The actuator 35 has a box-like main portion 35a, and two parallel rods 35b being capable of protruding from and entering into the main portion 35a in sync with each other. For example, a power cylinder, a hydraulic cylinder, an air cylinder, or the like can be used.

The radial mover 27 is fixed to the tips of the rods 35b of the actuator 35.
The radial mover 27 comprises a base 38c and two support plates 38a and 38b. The support plates 38a and 38b are arranged one above the other and protrude forwards from the base 38c. Between the upper and lower support plates 38a and 38b, a pair of rollers 39 are each supported rotatably around a vertical axis so that the rollers 39 can rotate when contacting with the tread face 2 of the rotating tire 1a.

In this embodiment, as shown in Fig.6, the spray gun 18 is fixed to the upper support plate 38a so that the spray gun 18 is positioned behind the front ends of the rollers 39 to prevent a direct contact between the spray gun 18 and the tread face 2.

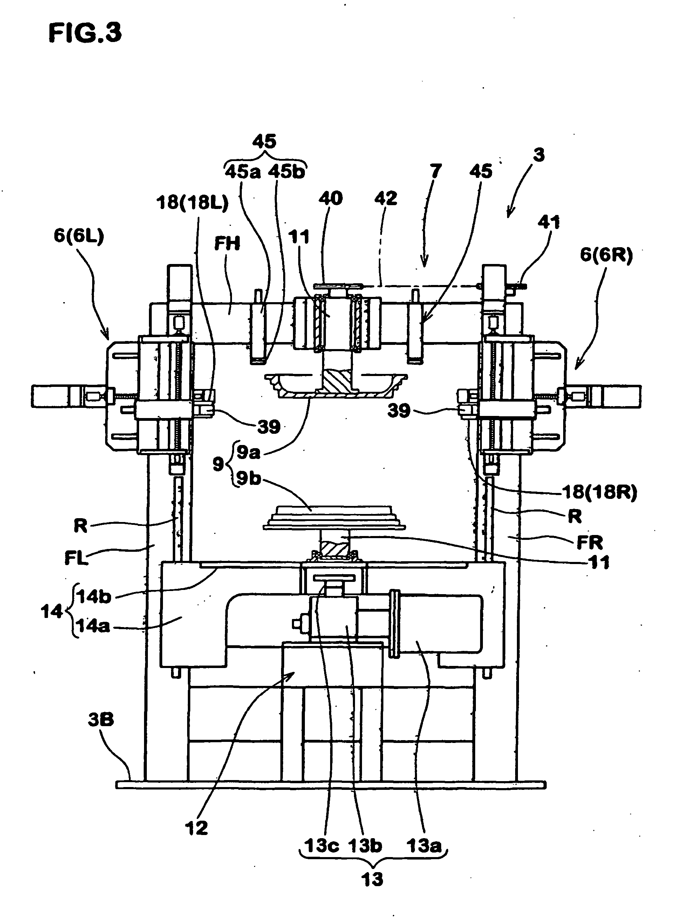

In the first spray gun shifter 6L shown in Fig.6, the first spray gun 18L is fixed to the upper support plate 38a as described above. However, in the second spray gun shifter 6R, as shown in Fig.3, the second spray gun 18R is fixed to the lower support plate 38b. Excepting this difference, the second spray gun shifter 6R has the essentially same (symmetric) structure as the first spray gun shifter 6L.

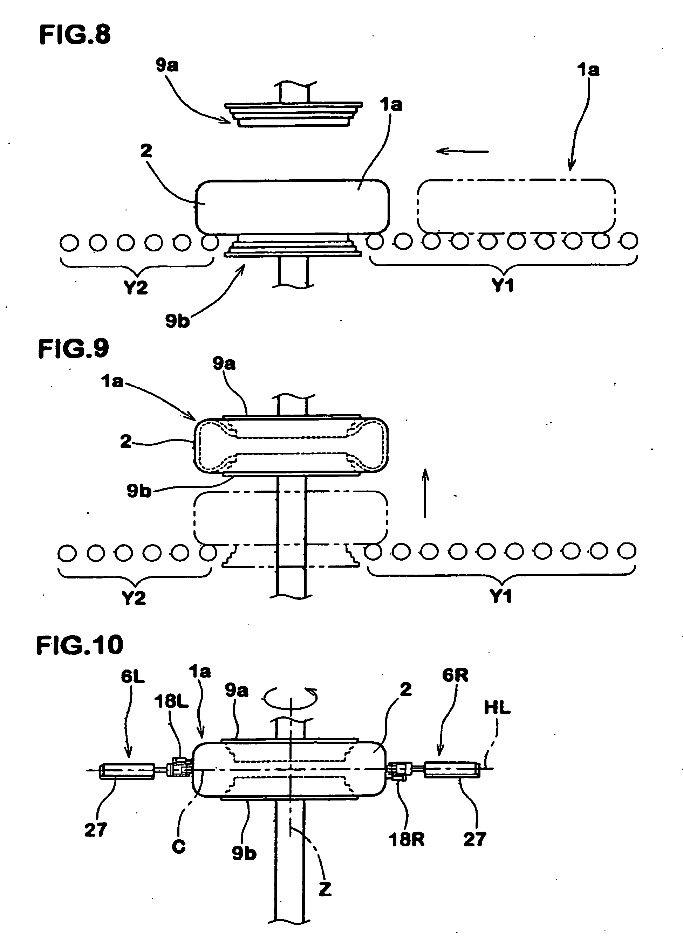

As a result, when the radial mover 27 of the first spray gun shifter 6L and that of the second spray gun shifter 6R are set at the same height, the spray guns 18L and 18R are, as shown in Fig.10, positioned at different heights, namely, different positions with respect to the tire axial direction.

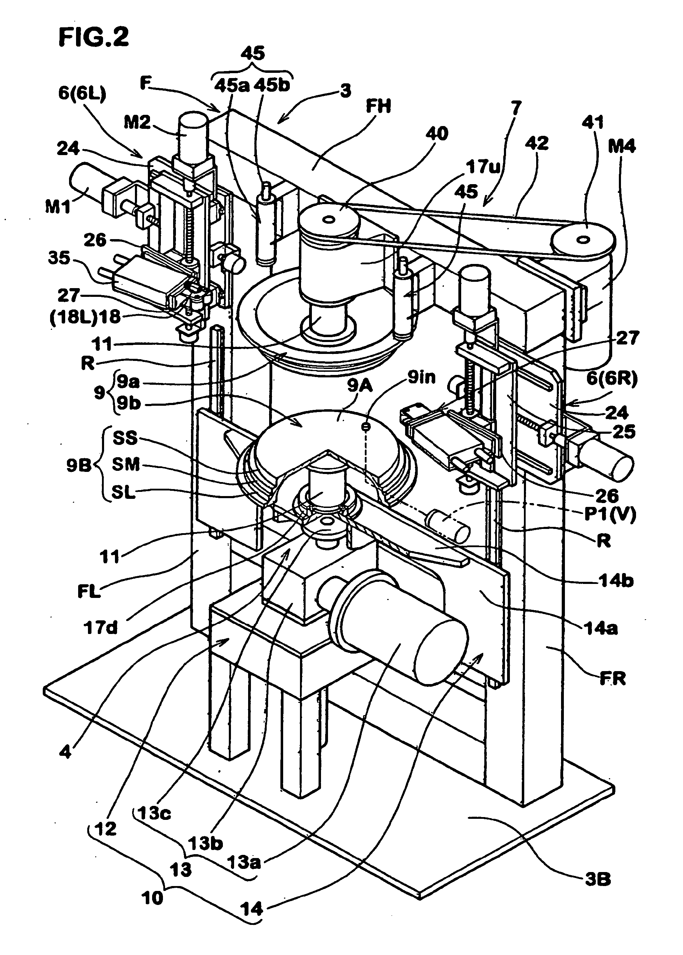

As shown in Fig.2, the above-mentioned rotator 7 comprises: a first wheel 40 fixed to the shaft 11 of the upper bead support disks 9a; an electric motor M4 fixed to the main frame F; a second wheel 41 driven by the electric motor M4; and an endless belt or chain 42 running between the first wheel 40 and second wheel 41. The first and second wheels 40 and 41 are, for example, pulleys, sprockets or toothed wheels. The endless belt or chain 42 is friction belt, cogged belt or chain.

By activating the electric motor M4, the upper bead support disk 9a is turned around the shaft 11. The electric motor M4 is controlled by the controller 8.

The spray-painting machine 3 is further provided with a tire remover 45 to remove the tire 1a from the tire holder 9.

As shown in Figs.2 and 4, the tire remover 45 comprises: a pair of cylinders 45a disposed one on each side of the upper bead support disk 9a; and a pair of rods 45b protrudes downwards from the cylinders 45a, respectively. The rods 45b, when extended, push down the sidewall of the tire 1a fitting to the upper bead support disk 9a and thus detach the tire from the upper disk 9a. The motion of the rods 45b is controlled by the controller 8.

Fig.7 is a control block diagram for the spray-painting machine 3 including the controller 8.

The controller 8 is a computer or a sequencer which can controls the electric motors, actuators and the like according to the stored program in response to the input data. In this embodiment, the controller 8 is a computer which comprises, as is well known, a central processing unit CPU, memories, I/O and the like, and the controller 8 controls: the rotator 7; the lifter 10 of the tire holding device 4; the air valve v; the spray gun shifters 6; the actuator 35; the electromagnetic valves SL1, SL2 of the paint spray system 5 at least according to a program stored in the memory.

As to the input data, various data including the outputs of the sensors D1 and D2 are input to the controller 8 in real time.

Next, operations of the painting machine will be descried.

As shown in Fig.8, using the upstream conveyer Y1, a vulcanized tire 1a is conveyed and stopped at a position above the lower bead support disk 9b by stoppers (not shown) controlled by the controller 8. In this position, the tire 1a can straddle between the upstream conveyer Y1 and downstream conveyer Y2, and thereby supported horizontally by the conveyers Y1 and Y2. The size of the tire 1a is input to the controller 8 beforehand, and the controller 8 sets control parameters (for example the stop position) accord with the input tire size to itself.

Then, the controller 8 activates the electric motor 13a of the lifter 10 to elevate the lower bead support disk 9b as shown in Fig.9. Therefore, the tire 1a departs from the conveyers and moves towards the upper bead support disk 9a together with the lower bead support disk 9b.
when the tire 1a gradually approaches the upper bead support disk 9a and reaches to a certain position, the disks 9a and 9b almost fit in the center holes of the tire.

Then, the controller 8 opens the air valve v to fill the tire hollow with the air supplied from the high pressure air source P1 up to a pressure in a range of 0.1 to 0.3 MPa. Thus, although the tire is not inflated practically, the tire beads completely fit to the bead seats, and the tire expresses its stable shape.

In this way, the tire 1a is held in such a state that the tire rotational axis is vertical.

As shown in Fig.10, using the first and second spray gun shifters 6L and 6R, the spray guns 18L and 18R are each placed at a certain position determined in advance in relation to the tread face 2 of the tire 1a held by the tire holder 9.
More specifically, in this embodiment, by moving the vertical mover 26, the thickness center of the radial mover 27 is adjusted to the same height as the equator C of the tire 1a.
The position (height) of the tire equator C can be known from the data of the tire size which has been input to the controller 8.

By moving the horizontal mover 25, the spray gun 18 is placed in a position such that the spraying direction PL substantially intersects the rotational axis z of the tire 1a held by the tire holder 9.

Then, by extending the rod 35b of the actuator 35, the radial mover 27 is approached to the tread face 2 until the rollers 39 comes into contact with the tread face 2.
The moving distance of the radial mover 27 or rod 35b is determined by the controller according to the tire size.

Near the tread face 2, the paint nozzle of the first spray gun 18L is located in a position higher than the tire equator C, and the paint nozzle of the second spray gun 18R is located in a position lower than the tire equator C.

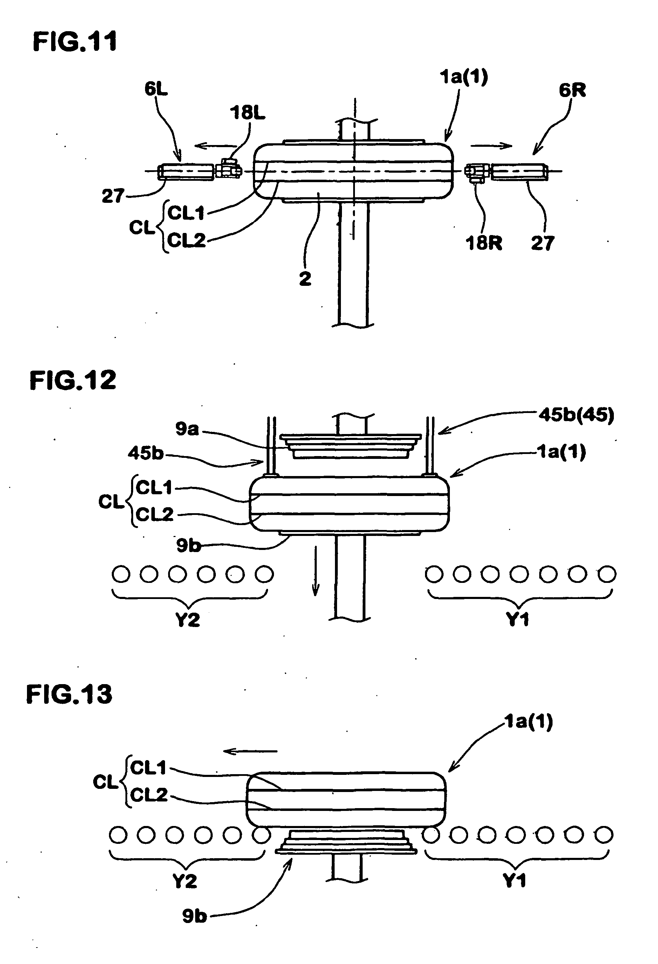

Then, the electric motor M4 of the rotator 7 is activated to rotate the tire 1a at least one turn around the rotation axis z at a speed of 20 to 200 rpm. During making a steady rotation, the spray guns 18L and 18R are each activated to spray the paint. Therefore, as shown in Fig.11, the tread face 2 is provided on each side of the tire equator C with a circumferentially continuous colored lines CL1 and CL2 as the identification mark CL.

These colored lines CL usually have different colors which are not black. But it is not always necessary. The colors may be the same.

In this embodiment, it is possible to control both of the spray gun shifters 6L and 6R to be the same height. Thus, the control is simple and easy.

When the colored lines CL are completely formed on the tread face 2, the controller 8 stops the spray gun and the rotation of the tire 1a. Then, as shown in Fig.11, the controller 8 activates the actuator 35 and the horizontal mover 25 to depart the spray guns 18L and 18R from the tread face 2.

Then, the controller 8 activates the lifter 10 to move downward the lower bead support disk 9b and at the same time, activates the tire remover 45 so as to protrude the rods 45b downward. Therefore, as shown in Fig.12, the tire is pushed downward and detached from the upper bead support disk 9a.

As the lower bead support disk 9b moves downwards, the tire 1 again straddles between the upstream conveyer Y1 and downstream conveyer Y2, and the lower disk 9b further moves downwards. As a result, the tire 1 is detached from the lower disk 9b, and the tire transfers completely to the conveyer Y1, Y2.

Then, as shown in Fig.13, the downstream conveyer Y2 is activated to convey the tire 1. Thus, the tire of which tread face is provided with two colored lines by spray-painting is manufactured.

In this embodiment, the identification mark is made up of two continuous lines. But, the mark may be made up of discontinuous lines formed by intermittently spraying the paint, namely, by programming the controller 8 like that. Further, although the intended tire is a pneumatic tire of which tread rubber is formed by winding a rubber tape, it can be a pneumatic tire of which tread rubber is a conventional wide strip. Especially, the object of the spray-painting machine 3 is not limited to the tires according to the tape winding method.

## Claims

1. A method of manufacturing a pneumatic tire comprising the steps of:
making a tread rubber (Tg) by winding a rubber tape (a) multiple times, the rubber tape (a) being smaller in width and thickness than the tread rubber (Tg);
building a raw tire (1R) by using the tread rubber (Tg) composed of multiple windings of the rubber tape (a);
vulcanizing the raw tire (1R) in a mold;
forming a mark (CL) on the surface of the vulcanized tire (1a) by spraying a paint,
wherein
said mark (CL) is an identification of the tire, and said surface is the tread face of the tread rubber (Tg), and the forming of the mark is achieved by use of a spray-painting machine (3),
the spray-painting machine (3) comprising:
a main frame (F) comprising
a pair of right and left vertical frames (FL and FR), and
a horizontal frame (FH) extending between the vertical frames (FL and FR);
an upstream conveyer (Y1) disposed on an upstream side of the main frame (F) in order to convey the vulcanized tire (1a) towards the main frame (F);
a downstream conveyer (Y2) disposed on a downstream side of the main frame (F) in order to carry out the tire (1) provided with the mark (CL);
a tire holding device (4) comprising
a pair of bead support disks (9a and 9b) arranged one above the other, and
a lifter (10) to move the lower bead support disk (9b) up and down,
wherein
each of the bead support disks (9a and 9b) is attached to an end of a shaft (11),
the shaft (11) of the upper bead support disk (9a) extends upwards and is rotatably supported by a bearing (17u) fixed to the side face of the horizontal frame (FH), and
the shaft (11) of the lower bead support disk (9b) extends downwards and is supported by a bearing (17d) fixed to the table (14b) coaxially with the shaft (11) of the upper disk (9a);
a rotator (7) comprising a motor (M4) fixed to the main frame (F) and coupled with the shaft (11) of the upper bead support disk (9a),
whereby the upper bead support disk (9a) is rotatable by the operation of the motor (M4) to rotate the tire held between the upper and lower bead support disks (9a and 9b);
a first spray gun (18L) and a second spray gun (18R);
a first spray gun shifter (6L) disposed on the vertical frames (FL) to move the first spray gun (18L) to a specific spray position; and
a second spray gun shifter (6R) disposed on the vertical frames (FR) to move the second spray gun (18R) to a specific spray position.

2. The method according to claim 1, wherein
the forming of said identification mark includes:
drawing a plurality of circumferentially continuous lines of which colors indicate tread rubber components.

3. The method according to claim 2, wherein
the forming of said identification mark includes:
holding the vulcanized tire (1a) between the upper and lower bead support disks (9a and 9b);
moving each spray gun (18L, 18R) to a certain position near the tread face;
rotating the tire around its rotational axis; and
spraying the paint during rotating.

4. The method according to claim 1, wherein
said identification mark (CL) is at least one circumferentially continuous line.

5. The method according to claim 1, wherein
the spray gun (18L, 18R) is supplied with the paint at a pressure of 0.01 to 0.1 MPa and a blowing air at a pressure of 0.05 to 0.3 MPa.

6. A spray-painting machine (3) comprising:
a main frame (F) comprising
a pair of right and left vertical frames (FL and FR), and
a horizontal frame (FH) extending between the vertical frames (FL and FR);
an upstream conveyer (Y1) disposed on an upstream side of the main frame (F) in order to convey a vulcanized tire (1a) towards the main frame (F);
a downstream conveyer (Y2) disposed on a downstream side of the main frame (F) in order to carry out the tire (1) provided with a mark (CL);
a tire holding device (4) comprising
a pair of bead support disks (9a and 9b) arranged one above the other, and
a lifter (10) to move the lower bead support disk (9b) up and down,
wherein
each of the bead support disks (9a and 9b) is attached to an end of a shaft (11),
the shaft (11) of the upper bead support disk (9a) extends upwards and is rotatably supported by a bearing (17u) fixed to the side face of the horizontal frame (FH), and
the shaft (11) of the lower bead support disk (9b) extends downwards and is supported by a bearing (17d) fixed to the table (14b) coaxially with the shaft (11) of the upper disk (9a);
a rotator (7) comprising a motor (M4) fixed to the main frame (F) and coupled with the shaft (11) of the upper bead support disk (9a),
whereby the upper bead support disk (9a) is rotatable by the operation of the motor (M4) to rotate the tire held between the upper and lower bead support disks (9a and 9b);
a first spray gun (18L) and a second spray gun (18R);
a first spray gun shifter (6L) disposed on the vertical frames (FL) to move the first spray gun (18L) to a specific spray position; and
a second spray gun shifter (6R) disposed on the vertical frames (FR) to move the second spray gun (18R) to a specific spray position.

## Patentansprüche

1. Verfahren zum Herstellen eines Luftreifens mit den Schritten, dass:
ein Laufflächenkautschuk (Tg) hergestellt wird, indem ein Kautschukband (a) mehrmals gewickelt wird, wobei das Kautschukband (a) eine geringere Breite und Dicke als der Laufflächenkautschuk (Tg) aufweist;
ein Rohreifen (1R) aufgebaut wird, indem der Laufflächenkautschuk (Tg) verwendet wird, der aus mehreren Wicklungen des Kautschukbands (a) zusammengesetzt ist;
der Rohreifen (1R) in einer Form vulkanisiert wird;
eine Markierung (CL) auf der Oberfläche des vulkanisierten Reifens (1a) gebildet wird, indem ein Lack aufgespritzt wird,
wobei
die Markierung (CL) eine Kennung des Reifens ist, und die Oberfläche die Laufflächenseite des Laufflächenkautschuks (Tg) ist, und das Bilden der Markierung durch Verwendung einer Spritzlackiermaschine (3) erreicht wird,
wobei die Spritzlackiermaschine (3) umfasst:
einen Hauptrahmen (F) mit
einem Paar rechten und linken vertikalen Rahmen (FL und FR) und
einem horizontalen Rahmen (FH), der sich zwischen den vertikalen Rahmen (FL und FR) erstreckt;
einen stromaufwärtigen Förderer (Y1), der an einer oberstromigen Seite des Hauptrahmens (F) angeordnet ist, um den vulkanisierten Reifen (1a) in Richtung des Hauptrahmens (F) zu befördern;
einen stromabwärtigen Förderer (Y2), der an einer stromabwärtigen Seite des Hauptrahmens (F) angeordnet ist, um den mit der Markierung (CL) versehenen Reifen (1) auszutragen;
eine Reifenhalteeinrichtung (4) mit
einem Paar Wulstträgerscheiben (9a und 9b), die übereinander angeordnet sind, und
einer Hebeeinrichtung (10), um die untere Wulstträgerscheibe (9b) aufwärts und abwärts zu bewegen,
wobei
jede der Wulstträgerscheiben (9a und 9b) an einem Ende einer Welle (11) angebracht ist,
die Welle (11) der oberen Wulstträgerscheibe (9a) sich nach oben erstreckt und durch ein Lager (17u) drehbar gelagert ist, das an der Seitenfläche des horizontalen Rahmens (FH) befestigt ist, und
die Welle (11) der unteren Wulstträgerscheibe (9b) sich nach unten erstreckt und durch ein an dem Tisch (14b) befestigtes Lager (17d) koaxial mit der Welle (11) der oberen Scheibe (9a) gelagert ist;
einen Rotator (7), der einen Motor (M4) umfasst, der an dem Hauptrahmen (F) befestigt und mit der Welle (11) der oberen Wulstträgerscheibe (9a) gekoppelt ist,
wodurch die obere Wulstträgerscheibe (9a) durch die Betätigung des Motors (M4) drehbar ist, um den zwischen der oberen und unteren Wulstträgerscheibe (9a und 9b) gehaltenen Reifen zu drehen;
eine erste Spritzpistole (18L) und eine zweite Spritzpistole (18R);
eine erste Spritzpistolen-Verschiebeeinrichtung (6L), die an den vertikalen Rahmen (FL) angeordnet ist, um die erste Spritzpistole (18L) in eine spezifische Spritzposition zu bewegen; und
eine zweite Spritzpistolen-Verschiebeeinrichtung (6R), die an den vertikalen Rahmen (FR) angeordnet ist, um die zweite Spritzpistole (18R) in eine spezifische Spritzposition zu bewegen.

2. Verfahren nach Anspruch 1, wobei das Bilden der Kennungsmarkierung umfasst, dass
eine Vielzahl von in Umfangsrichtung durchgehenden Linien gezogen wird, deren Farben die Laufflächenkautschukbestandteile angeben.

3. Verfahren nach Anspruch 2, wobei
das Bilden der Kennungsmarkierung umfasst, dass:
der vulkanisierte Reifen (1a) zwischen der oberen und unteren Wulstträgerscheibe (9a und 9b) gehalten wird;
jede Spritzpistole (18L, 18R) in eine bestimmte Position nahe der Laufflächenseite bewegt wird;
der Reifen um seine Drehachse gedreht wird; und
während des Drehens der Lack gespritzt wird.

4. Verfahren nach Anspruch 1, wobei
die Kennungsmarkierung (CL) zumindest eine in Umfangsrichtung durchgehende Linie ist.

5. Verfahren nach Anspruch 1, wobei
die Spritzpistole (18L, 18R) mit dem Lack mit einem Druck von 0,01 bis 0,1 MPa und einer Blasluft mit einem Druck von 0,05 bis 0,3 MPa versorgt wird.

6. Spritzlackiermaschine (3) umfassend:
einen Hauptrahmen (F) mit
einem Paar rechten und linken vertikalen Rahmen (FL und FR) und
einem horizontalen Rahmen (FH), der sich zwischen den vertikalen Rahmen (FL und FR) erstreckt;
einen stromaufwärtigen Förderer (Y1), der an einer oberstromigen Seite des Hauptrahmens (F) angeordnet ist, um einen vulkanisierten Reifen (1a) in Richtung des Hauptrahmens (F) zu befördern;
einen stromabwärtigen Förderer (Y2), der an einer stromabwärtigen Seite des Hauptrahmens (F) angeordnet ist, um den mit einer Markierung (CL) versehenen Reifen (1) auszutragen;
eine Reifenhalteeinrichtung (4) mit
einem Paar Wulstträgerscheiben (9a und 9b), die übereinander angeordnet sind, und
einer Hebeeinrichtung (10), um die untere Wulstträgerscheibe (9b) aufwärts und abwärts zu bewegen,
wobei
jede der Wulstträgerscheiben (9a und 9b) an einem Ende einer Welle (11) angebracht ist,
die Welle (11) der oberen Wulstträgerscheibe (9a) sich nach oben erstreckt und durch ein Lager (17u) drehbar gelagert ist, das an der Seitenfläche des horizontalen Rahmens (FH) befestigt ist, und
die Welle (11) der unteren Wulstträgerscheibe (9b) sich nach unten erstreckt und durch ein an dem Tisch (14b) befestigtes Lager (17d) koaxial mit der Welle (11) der oberen Scheibe (9a) gelagert ist;
einen Rotator (7), der einen Motor (M4) umfasst, der an dem Hauptrahmen (F) befestigt und mit der Welle (11) der oberen Wulstträgerscheibe (9a) gekoppelt ist,
wodurch die obere Wulstträgerscheibe (9a) durch die Betätigung des Motors (M4) drehbar ist, um den zwischen der oberen und unteren Wulstträgerscheibe (9a und 9b) gehaltenen Reifen zu drehen;
eine erste Spritzpistole (18L) und eine zweite Spritzpistole (18R);
eine erste Spritzpistolen-Verschiebeeinrichtung (6L), die an den vertikalen Rahmen (FL) angeordnet ist, um die erste Spritzpistole (18L) in eine spezifische Spritzposition zu bewegen; und
eine zweite Spritzpistolen-Verschiebeeinrichtung (6R), die an den vertikalen Rahmen (FR) angeordnet ist, um die zweite Spritzpistole (18R) in eine spezifische Spritzposition zu bewegen.

## Revendications

1. Procédé de fabrication d'un bandage pneumatique, comprenant les étapes consistant à :
réaliser un caoutchouc de bande de roulement (Tg) en enroulant une bande de caoutchouc (a) une multiplicité de fois, la bande de caoutchouc (a) ayant une largeur et une épaisseur inférieures au caoutchouc de bande de roulement (Tg) ;
réaliser un pneumatique cru (1R) en utilisant le caoutchouc de bande de roulement (Tg) composé de la multiplicité d'enroulements de la bande de caoutchouc (a) ;
vulcaniser le pneumatique cru (1R) dans un moule ;
former une marque (CL) sur la surface du pneumatique vulcanisé (1a) en pulvérisant une peinture,
dans lequel
ladite marque (CL) est une identification du pneumatique, et ladite surface est la face de roulement du caoutchouc de bande de roulement (Tg), et la formation de la marque est réalisée en utilisant une machine de peinture par pulvérisation (3),
la machine de peinture par pulvérisation (3) comprenant :
un châssis principal (F) comprenant
une paire de châssis verticaux droit et gauche (FL et FR), et
un châssis horizontal (FH) s'étendant entre les châssis verticaux (FL et FR) ;
un convoyeur amont (Y1) disposé sur un côté amont du châssis principal (F) afin de convoyer le pneumatique vulcanisé (1a) vers le châssis principal (F) ;
un convoyeur aval (Y2) disposé sur un côté aval du châssis principal (F) afin de faire sortir le pneumatique (1) doté de la marque (CL) ;
un dispositif de maintien de pneumatique (4) comprenant une paire de disques de support de talon (9a et 9b) agencés l'un au-dessus de l'autre, et
un dispositif de levage (10) pour déplacer le disque de support de talon inférieur (9b) en montant et en descendant,
dans lequel chacun des disques de support de talon (9a et 9b) est attaché à une extrémité d'un arbre (11),
l'arbre (11) du disque de support de talon supérieur (9a) s'étend vers le haut et est supporté en rotation par un palier (17u) fixé sur la face latérale du châssis horizontal (FH), et
l'arbre (11) du disque de support de talon inférieur (9b) s'étend vers le bas et est supporté par un palier (17d) fixé sur la table (14b) coaxialement à l'arbre (11) du disque supérieur (9a) ;
un entraînement de rotation (7) comprenant un moteur (M4) fixé sur le châssis principal (F) et couplé à l'arbre (11) du disque de support de talon supérieur (9a),
grâce à quoi le disque de support de talon supérieur (9a) est mis en rotation par le fonctionnement du moteur (M4) pour faire tourner le pneumatique tenu entre les disques de support de talon supérieur et inférieur (9a et 9b) ;
un premier pistolet de pulvérisation (18L) et un second pistolet de pulvérisation (18R) ;
un premier organe de déplacement pour pistolet de pulvérisation (6L) disposé sur les châssis verticaux (FL) pour déplacer le premier pistolet de pulvérisation (18L) à une position de pulvérisation spécifique ; et
un second organe de déplacement pour pistolet de pulvérisation (6R) disposé sur les châssis verticaux (FR) pour déplacer le second pistolet de pulvérisation (18R) à une position de pulvérisation spécifique.

2. Procédé selon la revendication 1, dans lequel l'étape de formation de ladite marque d'identification inclut :
l'opération consistant à tirer une pluralité de lignes continues en sens circonférentiel, dont les couleurs indiquent des composants du caoutchouc de bande de roulement.

3. Procédé selon la revendication 2, dans lequel
l'étape de formation de ladite marque d'identification inclut les opérations consistant à :
tenir le pneumatique vulcanisé (1a) entre les disques support de talon supérieur et inférieur (9a et 9b) :
déplacer chaque pistolet de pulvérisation (18L, 18R) à une certaine position proche de la face de roulement ;
mettre en rotation le pneumatique autour de son axe de rotation ; et pulvériser la peinture pendant la rotation.

4. Procédé selon la revendication 1, dans lequel
ladite marque d'identification (CL) est au moins une ligne continue en sens circonférentiel.

5. Procédé selon la revendication 1, dans lequel
le pistolet de pulvérisation (18L, 18R) est alimenté avec la peinture sous une pression de 0,01 à 0,1 MPa et avec de l'air soufflé sous une pression de 0,05 à 0,3 MPa.

6. Machine de peinture par pulvérisation (3) comprenant :
un châssis principal (F) comprenant
une paire de châssis verticaux gauche et droit (FL et FR), et
un châssis horizontal (FH) s'étendant entre les châssis verticaux (FL et FR) ;
un convoyeur amont (Y1) disposé sur un côté amont du châssis principal (F) afin de convoyer un pneumatique vulcanisé (1a) vers le châssis principal (F) ;
un convoyeur aval (Y2) disposé sur un côté aval du châssis principal (F) afin de faire sortir le pneumatique (1) doté d'une marque (CL) ;
un dispositif de maintien de pneumatique (4) comprenant une paire de disques de support de talon (9a et 9b) agencés l'un au-dessus de l'autre, et
un dispositif de levage (10) pour déplacer le disque de support de talon inférieur (9b) vers le haut et vers le bas, dans lequel chacun des disques de support de talon (9a et 9b) est attaché à une extrémité d'un arbre (11),
l'arbre (11) du disque de support de talon supérieur (9a) s'étend vers le haut et est supporté en rotation par un palier (17u) fixé sur la face latérale du châssis horizontal (FH), et
l'arbre (11) du disque de support de talon inférieur (9b) s'étend vers le bas et est supporté par un palier (17d) fixé sur la table (14b) coaxialement avec l'arbre (11) du disque supérieur (9a) ;
un entraînement de rotation (7) comprenant un moteur (M4) fixé sur le châssis principal (F) et couplé avec l'arbre (11) du disque de support de talon supérieur (9a), grâce à quoi le disque de support de talon supérieur (9a) est mis en rotation par le fonctionnement du moteur (M4) pour faire tourner le pneumatique tenu entre les disques de support de talon supérieur et inférieur (9a et 9b) ;
un premier pistolet de pulvérisation (18L) et un second pistolet de pulvérisation (18R) ;
un premier organe de déplacement pour pistolet de pulvérisation (6L) disposé sur le châssis vertical (FL) pour déplacer le premier pistolet de pulvérisation (18L) à une position de pulvérisation spécifique ; et
un second organe de déplacement pour pistolet de pulvérisation (6R) disposé sur le châssis vertical (FR) pour déplacer le second pistolet de pulvérisation (18R) à une position de pulvérisation spécifique.
